# EUROPEAN PATENT APPLICATION

(11) **EP 4 629 310 A1**
(43) Date of publication of application: **08.10.2025**
(21) Application number: 23897566.8
(22) Date of filing: 17.11.2023
(51) Int. Cl.: H01M 4/13, H01M 10/0587

(54) **SECONDARY BATTERY POSITIVE ELECTRODE AND SECONDARY BATTERY**

(30) Priority: 30.11.2022 JP 2022191967
(71) Applicant: Panasonic Energy Co., Ltd., Osaka 570-8511 (JP)
(72) Inventor: NAMBUYA, Shunsuke, Osaka 571-0057 (JP)
(74) Representative: Eisenführ Speiser
(86) International application number: PCT/JP2023/041524
(87) International publication number: WO 2024/116916

(57) **Abstract**

A positive electrode (11) has a positive electrode first area (30) positioned at one end portion (11a) side of the positive electrode in a short direction, and a positive electrode second area (32), which is an area from a positive electrode central end portion (30a) of the positive electrode first area (30) to another end portion (11b) in the short direction. The positive electrode (11) is characterized in that: the positive electrode first area (30) has an uncoated portion (30b) at which a positive electrode mixture layer is not disposed on a positive electrode core body, and a first area coated portion (30c) at which the positive electrode mixture layer is disposed on the positive electrode core body; the positive electrode second area (32) has a second area coated portion (32a) at which the positive electrode mixture layer is disposed on the positive electrode core body; and a mass per unit area of the positive electrode mixture layer in the first area coated portion (30c) is at least 4% greater than the mass per unit area of the positive electrode mixture layer in the second area coated portion (32a).

## Description

### TECHNICAL FIELD

The present disclosure relates to a secondary battery positive electrode and a secondary battery.

### BACKGROUND

Conventionally, there is a secondary battery including an electrode assembly in which a positive electrode and a negative electrode are wound with a separator interposed therebetween. For example, Patent Literature 1 discloses, as a positive electrode constituting a wound electrode assembly, a positive electrode having a belt-like positive electrode core and a positive electrode mixture layer disposed on the positive electrode core, and having a non-coated part in which the positive electrode mixture layer is not formed at one end portion of the positive electrode in a short direction of the positive electrode and the positive electrode core is exposed.

### CITATION LIST

### PATENT LITERATURE

Patent Literature 1: WO 2020/045375 A

### SUMMARY

By the way, when the positive electrode having the non-coated part where the positive electrode mixture layer is not formed at the one end portion of the positive electrode in the short direction of the positive electrode and the positive electrode core is exposed is used, the stress applied to the one end portion of the positive electrode in the short direction of the positive electrode decreases as the battery is charged and discharged. **In** such a state, the positive electrode constituting the wound electrode assembly elongates in the short direction (width direction), and the winding deviation of the positive electrode in the short direction may occur (hereinafter, it is referred to as winding deviation in the short direction of the positive electrode during charging and discharging of the battery). **In** addition, when the stress on the one end portion of the positive electrode in the short direction decreases as the battery is charged and discharged, the one end portion of the positive electrode in the short direction may be separated from the facing separator or negative electrode (hereinafter, such a state is referred to as positive electrode floating). Since there is a possibility that winding deviation in the short direction of the positive electrode or positive electrode floating may cause degradation in battery performance, improvement is desired.

Therefore, an object of the present disclosure is to provide a secondary battery positive electrode capable of suppressing the occurrence of winding deviation in a short direction of a positive electrode and positive electrode floating during charging and discharging of a battery, and a secondary battery including the secondary battery positive electrode.

A secondary battery positive electrode according to an aspect of the present disclosure includes: a belt-like positive electrode core; and a positive electrode mixture layer disposed on the positive electrode core, in which the secondary battery positive electrode has a positive electrode first region located on one end portion side of the positive electrode in a short direction of the positive electrode and a positive electrode second region which is a region from a positive electrode central end portion of the positive electrode first region to the other end portion in the short direction, the positive electrode first region has a non-coated part where the positive electrode mixture layer is not disposed on the positive electrode core, and a first region coated part where the positive electrode mixture layer is disposed on the positive electrode core, the positive electrode second region has a second region coated part where the positive electrode mixture layer is disposed on the positive electrode core, and a mass per unit area of the positive electrode mixture layer in the first region coated part is greater than a mass per unit area of the positive electrode mixture layer in the second region coated part by a value greater than or equal to 4%.

A secondary battery according to an aspect of the present disclosure includes an electrode assembly in which the above-described secondary battery positive electrode and a negative electrode having a belt-like negative electrode core and a negative electrode mixture layer disposed on the negative electrode core are wound with a separator interposed between the secondary battery positive electrode and the negative electrode.

According to the present disclosure, it is possible to suppress the occurrence of winding deviation in the short direction of the positive electrode and positive electrode floating during charging and discharging of the battery.

### BRIEF DESCRIPTION OF DRAWINGS

FIG. 1 is a schematic cross-sectional view of a secondary battery according to an example of an embodiment.
FIG. 2 is a schematic plan view of a positive electrode according to an example of the embodiment.
FIG. 3 is a schematic plan view of a positive electrode according to another example of the embodiment.
FIG. 4 is a schematic plan view of a negative electrode according to an example of the embodiment.
FIG. 5 is a schematic plan view of a negative electrode according to another example of the embodiment.
FIG. 6 is a view for describing a method of evaluating deformation of an electrode plate.

### DESCRIPTION OF EMBODIMENTS

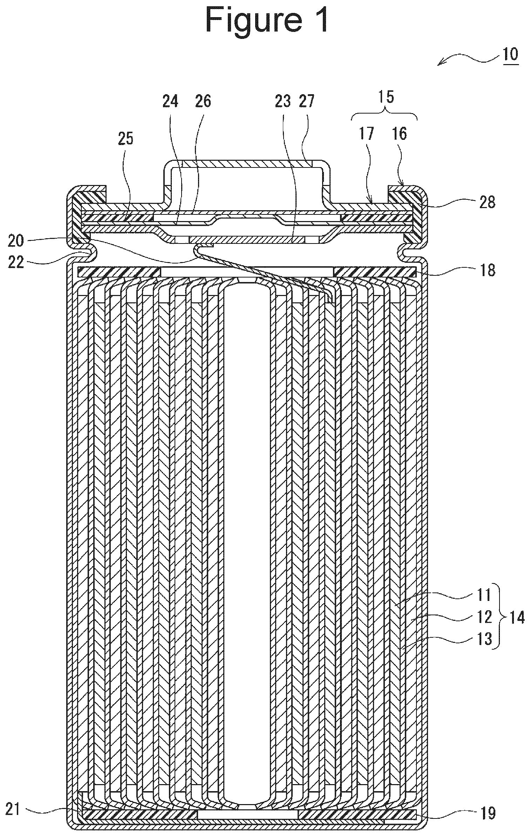

FIG. 1 is a schematic cross-sectional view of a secondary battery according to an example of an embodiment. The secondary battery 10 illustrated in FIG. 1 includes a wound electrode assembly 14 formed by winding a positive electrode 11 and a negative electrode 12 with a separator 13 interposed between the positive electrode 11 and the negative electrode 12, an electrolyte, insulating plates 18 and 19 that are disposed on upper and lower sides of the electrode assembly 14, respectively, and a battery case 15 housing the above-described members. The battery case 15 includes a case body 16 and a sealing assembly 17 that seals an opening of the case body 16. The battery case 15 is not limited to a cylindrical metal case and may be, for example, a rectangular metal case or a resin case (so-called laminate type) formed by laminating a resin sheet.

The electrolyte has, for example, ion conductivity (for example, lithium ion conductivity). The electrolyte may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

As the solid electrolyte, for example, a solid or gel polymer electrolyte, an inorganic solid electrolyte, or the like can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. As the inorganic solid electrolyte, for example, a material (for example, an oxide-based solid electrolyte, a sulfide-based solid electrolyte, a halogen-based solid electrolyte, or the like) known for all-solid-state lithium ion secondary batteries and the like can be used. The electrolyte exemplified above is a non-aqueous electrolyte, but the electrolyte is not limited to the non-aqueous electrolyte, and may be an aqueous electrolyte.

The case body 16 is, for example, a bottomed cylindrical metal container. A gasket 28 is provided between the case body 16 and the sealing assembly 17 to ensure airtightness inside the battery. The case body 16 has a projecting portion 22 in which, for example, a part of a side surface portion of the case body 16 projects inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are sequentially stacked from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus a current pathway between the lower vent member 24 and the upper vent member 26 is interrupted. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is a bottom plate of the sealing assembly 17, by welding or the like, and the cap 27, which is electrically connected to the filter 23 and is a top plate of the sealing assembly 17, serves as a positive electrode terminal. The negative electrode lead 21 is connected to a bottom inner surface of the case body 16 by welding or the like, and the case body 16 serves as a negative electrode terminal.

The positive electrode 11, the negative electrode 12, and the separator 13 will be described below in detail.

### [Positive Electrode]

The positive electrode 11 has a belt-like positive electrode core and a positive electrode mixture layer disposed on the positive electrode core. The positive electrode mixture layer may be provided on one surface or both surfaces of the positive electrode core. As the positive electrode core, a foil of a metal that is aluminum or the like and is stable in a potential range of the positive electrode 11, a film in which the metal is disposed on a surface layer thereof, or the like can be used. The positive electrode mixture layer contains a positive electrode active material. The positive electrode mixture layer may contain a binding material, a conductive agent, or the like.

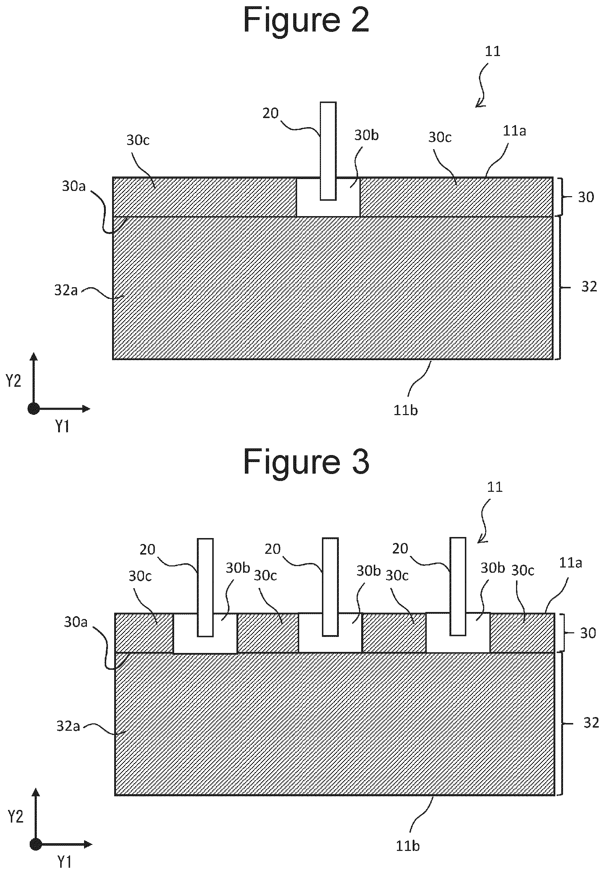

FIG. 2 is a schematic plan view of the positive electrode according to an example of the embodiment. The positive electrode 11 shown in FIG. 2 is in a state before being wound as the electrode assembly 14. In FIG. 2, an arrow Y1 indicates a winding direction of the positive electrode 11 when the electrode assembly 14 is produced, and indicates a longitudinal direction of the positive electrode 11 (that is, a longitudinal direction of the positive electrode core and the positive electrode mixture layer). In FIG. 2, an arrow Y2 orthogonal to the arrow Y1 indicates a winding axis direction of the positive electrode 11 (that is, a winding axis direction of the electrode assembly 14) and a short direction of the positive electrode 11 (that is, a short direction of the positive electrode core and the positive electrode mixture layer).

As shown in FIG. 2, the positive electrode 11 has a positive electrode first region 30 located on one end portion 11a side of the positive electrode 11 in the short direction of the positive electrode 11, and a positive electrode second region 32 which is a region from a positive electrode central end portion 30a of the positive electrode first region 30 to the other end portion 11b of the positive electrode 11 in the short direction of the positive electrode 11. The ratio of the width (length in the short direction) of the positive electrode first region 30 to the width (length in the short direction) of the positive electrode second region 32 may be, for example, in the range of 1:15 to 3:4.

The positive electrode first region 30 of the positive electrode 11 has a non-coated part 30b where the positive electrode mixture layer is not disposed on the positive electrode core and the positive electrode core is exposed, and a first region coated part 30c where the positive electrode mixture layer is disposed on the positive electrode core. The positive electrode second region 32 has a second region coated part 32a where the positive electrode mixture layer is disposed on the positive electrode core. The positive electrode lead 20 is attached to the positive electrode core of the non-coated part 30b. In FIG. 2, one non-coated part 30b is provided at the center of the positive electrode first region 30 in the longitudinal direction of the positive electrode first region 30, but the present embodiment is not limited thereto. As shown in FIG. 3, a plurality of non-coated parts 30b may be provided at intervals in the longitudinal direction of the positive electrode first region 30. Positive electrode leads 20 may be attached to respective positive electrode cores of the plurality of non-coated parts 30b. The plurality of positive electrode leads 20 attached to the positive electrode cores of the plurality of non-coated parts 30b may be bundled and connected to the sealing assembly 17 side, or the plurality of positive electrode leads 20 may be separately connected to the sealing assembly 17 side.

In the present embodiment, the mass per unit area of the positive electrode mixture layer in the first region coated part 30c is greater than the mass per unit area of the positive electrode mixture layer in the second region coated part 32a by a value greater than or equal to 4%, preferably by a value greater than or equal to 5% and less than or equal to 10%. By making the mass per unit area of the positive electrode mixture layer in the first region coated part 30c greater than the mass per unit area of the positive electrode mixture layer in the second region coated part 32a by a value greater than or equal to 4%, the diameter of the electrode assembly 14 corresponding to the position of the positive electrode first region 30 is increased, so that the stress applied to one end portion of the positive electrode 11 in the short direction of the positive electrode 11 increases as the battery is charged and discharged. As a result, it is possible to suppress the occurrence of winding deviation in the short direction of the positive electrode and positive electrode floating during charging and discharging of the battery.

The mass per unit area of the positive electrode mixture layer in the first region coated part 30c is preferably, for example, in the range of 0.023 to 0.033 g/cm². The mass per unit area of the positive electrode mixture layer in the second region coated part 32a is preferably, for example, in the range of 0.022 to 0.031 g/cm².

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). Among them, one type may be used alone, or a plurality of types may be used in combination. From the viewpoint of achieving the high capacity of the non-aqueous electrolyte secondary battery, the positive electrode active material preferably contains a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 <x ≤ 1.2, 0 < y ≤ 0.9, and 2.0 ≤ z ≤ 2.3).

Examples of the conductive agent that may be contained in the positive electrode mixture layer include carbon-based particles such as carbon black (CB), acetylene black (AB), Ketjenblack, carbon nanotubes (CNT), graphene, and graphite. Among them, one type may be used alone, or two or more types may be used in combination.

Examples of the binding material that may be contained in the positive electrode mixture layer include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof (PAA-Na, PAA-K, or the like and a partially neutralized salt may be used), and polyvinyl alcohol (PVA). Among them, one type may be used alone, or two or more types may be used in combination.

A method of producing the positive electrode 11 will be described. First, a positive electrode active material, a binding material, a conductive agent, and the like are mixed to prepare a positive electrode mixture slurry. Then, the positive electrode mixture slurry is applied with a predetermined width and a predetermined thickness to one end portion of the positive electrode core in the short direction of the positive electrode core along the longitudinal direction of the positive electrode core to prepare the positive electrode first region 30. In this case, it is preferable to intermittently apply the positive electrode mixture slurry along the longitudinal direction of the positive electrode core to prepare the non-coated part 30b (one or more non-coated parts) where the positive electrode mixture layer is not disposed on the positive electrode core and the first region coated part 30c where the positive electrode mixture layer is disposed on the positive electrode core. In addition, the positive electrode mixture slurry is applied with a predetermined thickness onto the remaining positive electrode core other than the positive electrode first region 30 to prepare the positive electrode second region 32 including the second region coated part 32a where the positive electrode mixture layer is disposed on the positive electrode core. However, in order to make the mass per unit area of the positive electrode mixture layer in the first region coated part 30c greater than the mass per unit area of the positive electrode mixture layer in the second region coated part 32a, for example, the positive electrode mixture slurry is applied onto the positive electrode core such that the thickness of the positive electrode mixture layer in the first region coated part 30c is greater than the thickness of the positive electrode mixture layer in the second region coated part 32a.

A positive electrode member in which the positive electrode first region 30 and the positive electrode second region 32 were produced is dried and then rolled using a roller or the like. In this manner, the positive electrode 11 of the present embodiment can be prepared. The method of preparing the non-coated part is not limited to the above, and for example, a method of applying the positive electrode mixture slurry onto the positive electrode core and then scraping off the positive electrode mixture layer on the positive electrode core may be used.

### [Negative Electrode]

The negative electrode 12 includes a negative electrode core and a negative electrode mixture layer disposed on the negative electrode core. The negative electrode mixture layer may be provided on one surface of the negative electrode core or may be provided on both surfaces of the negative electrode core. As the negative electrode core, a foil of a metal that is copper or the like and is stable in a potential range of the negative electrode 12, a film in which the metal is disposed on a surface layer thereof, or the like can be used. The negative electrode mixture layer contains a negative electrode active material. The negative electrode mixture layer may contain a binding material or the like.

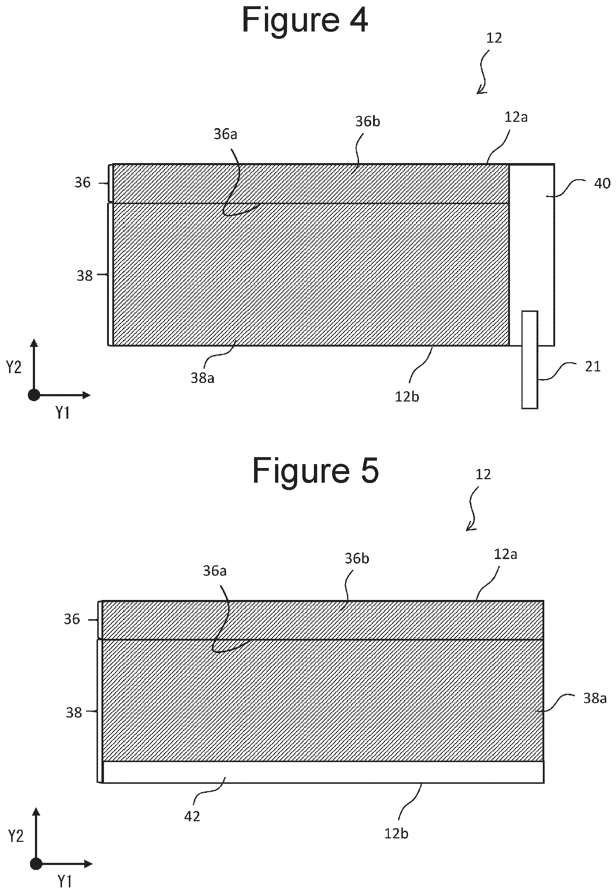

FIG. 4 is a schematic plan view of the negative electrode according to an example of the embodiment. The negative electrode 12 shown in FIG. 4 is in a state before being wound as the electrode assembly 14. In FIG. 4, an arrow Y1 indicates a winding direction of the negative electrode 12 when the electrode assembly 14 is produced, and indicates a longitudinal direction of the negative electrode 12 (that is, a longitudinal direction of the negative electrode core and the negative electrode mixture layer). In FIG. 4, an arrow Y2 orthogonal to the arrow Y1 indicates a winding axis direction of the negative electrode 12 (that is, a winding axis direction of the electrode assembly 14) and a short direction of the negative electrode 12 (that is, a short direction of the negative electrode core and the negative electrode mixture layer).

As shown in FIG. 4, the negative electrode 12 has a negative electrode first region 36 located on one end portion 12a side of the negative electrode 12 in the short direction of the negative electrode 12, and a negative electrode second region 38 which is a region from a negative electrode central end portion 36a of the negative electrode first region 36 to the other end portion 12b in the short direction of the negative electrode 12. The ratio of the width (length in the short direction) of the negative electrode first region 36 to the width (length in the short direction) of the negative electrode second region 38 may be, for example, in the range of 1:15 to 3:4. The negative electrode first region 36 of the negative electrode 12 has a first region coated part 36b where the negative electrode mixture layer is disposed on the negative electrode core. The negative electrode second region 38 has a second region coated part 38a where the negative electrode mixture layer is disposed on the negative electrode core.

As shown in FIG. 4, the negative electrode 12 has a non-coated part 40 where the negative electrode mixture layer is not disposed on the negative electrode core and the negative electrode core is exposed, on the terminal end side in the winding direction of the negative electrode 12. The non-coated part 40 shown in FIG. 4 is formed extending from the negative electrode first region 36 to the negative electrode second region 38. The negative electrode lead 21 is attached to the negative electrode core of the non-coated part 40. FIG. 5 is a schematic plan view of a negative electrode according to another example of the embodiment. As shown in FIG. 5, in the negative electrode 12, a non-coated part 42 where the negative electrode mixture layer is not disposed on the negative electrode core and the negative electrode core is exposed may be provided on the other end portion 12b side in the short direction of the negative electrode 12. The non-coated part 42 may be brought into contact with a bottom portion of the case body 16. Accordingly, the case **body 16** serves as a negative electrode terminal.

In the present embodiment, the positive electrode first region 30 and the negative electrode first region 36 described above are located on one end side of the electrode assembly 14 in the winding axis direction of the electrode assembly 14, and the mass per unit area of the negative electrode mixture layer in the first region coated part 36b is greater than the mass per unit area of the negative electrode mixture layer in the second region coated part 38a by a value greater than or equal to 4%, and preferably a value greater than or equal to 5% and less than or equal to 10%. According to such an aspect, it is possible to further suppress the occurrence of winding deviation in the short direction of the positive electrode and positive electrode floating during charging and discharging of the battery, or it is possible to suppress precipitation of metal lithium on the electrode and deformation of the electrode associated with charging and discharging of the battery.

The mass per unit area of the negative electrode mixture layer in the first region coated part 36b is preferably, for example, in the range of 0.011 to 0.021 g/cm². The mass per unit area of the negative electrode mixture layer in the second region coated part 38a is preferably, for example, in the range of 0.010 to 0.020 g/cm².

Examples of the negative electrode active material contained in the negative electrode mixture layer include carbon materials such as graphite, metals and alloys such as Si and Sn, metal compounds containing Si and Sn, and metal oxides having a lithium element. Examples of the graphite include natural graphite such as scale-like graphite, massive graphite, and earthy graphite, and artificial graphite such as massive artificial graphite and graphitized mesophase carbon microbeads. Examples of the Si-containing metal compound include a Si-containing compound represented by SiOₓ (0.5 ≤ x ≤ 1.6) and a Si-containing compound in which Si fine particles are dispersed in a lithium silicate phase represented by Li_{2y}SiO_{(2+y)} (0 < y < 2). Examples of the metal oxides having a lithium element include lithium titanate (Li₄Ti₅O₁₂ and the like).

Examples of the binding material contained in the negative electrode mixture layer include materials similar to those for the positive electrode 11. The negative electrode mixture layer may contain a conductive agent. Examples of the conductive agent include materials similar to those for the positive electrode 11.

A method of producing the negative electrode 12 will be described. First, a region of the negative electrode core corresponding to the terminal portion of the negative electrode 12 in the winding direction and the other end portion 12b of the negative electrode 12 in the short direction is set as a non-coated part to which the positive electrode mixture slurry is not applied, and a region of the negative electrode core other than the non-coated part is set as a coated part. Then, a negative electrode mixture slurry containing a negative electrode active material, a binding material, and the like is applied with a predetermined width and a predetermined thickness to one end portion of the negative electrode core in the short direction of the negative electrode core in the coated part along the longitudinal direction of the negative electrode core to prepare the negative electrode first region 36 having the first region coated part 36b where the negative electrode mixture layer is disposed on the negative electrode core. **In** addition, the negative electrode mixture slurry is applied with a predetermined thickness onto the remaining negative electrode core other than the negative electrode first region 36 in the coated part to prepare the negative electrode second region 38 having the second region coated part 38a where the negative electrode mixture layer is disposed on the negative electrode core. However, in order to make the mass per unit area of the negative electrode mixture layer in the first region coated part 36b greater than the mass per unit area of the negative electrode mixture layer in the second region coated part 38a, for example, the negative electrode mixture slurry is applied onto the negative electrode core such that the thickness of the negative electrode mixture layer in the first region coated part 36b is greater than the thickness of the negative electrode mixture layer in the second region coated part 38a.

A negative electrode member in which the negative electrode first region 36 and the negative electrode second region 38 were produced is dried and then rolled using a roller or the like. In this manner, the negative electrode 12 of the present embodiment can be prepared. As a method of preparing the non-coated part, for example, a method of applying the negative electrode mixture slurry onto the negative electrode core and then scraping off the negative electrode mixture layer on the negative electrode core may be used.

### [Separator]

As the separator 13, for example, a porous sheet having ion permeability and insulating properties is used. Specific examples of the porous sheet include fine porous thin films, woven fabrics, and nonwoven fabrics. As a material of the separator 13, polyolefin such as polyethylene and polypropylene, and cellulose are suitable. The separator 13 may have a single-layered structure or a multilayered structure. On the surface of the separator, for example, a heat-resistant layer may be formed.

### EXAMPLES

The present disclosure will be further described below with reference to Examples. However, the present disclosure is not limited to these Examples.

### [Production of Positive Electrode]

A lithium transition metal oxide having a composition of LiNi_{0.8}Co_{0.1}Mn_{0.1}O₂, carbon black, and polyvinylidene fluoride (PVDF) were mixed at a solid content mass ratio of 98:1:1, an appropriate amount of N-methyl-2-pyrrolidone (NMP) was added thereto, and then the mixture was kneaded to prepare a positive electrode mixture slurry.

The positive electrode mixture slurry was applied to a predetermined position of a positive electrode core made of an aluminum foil to produce a positive electrode shown in FIG. 3. Specifically, the positive electrode mixture slurry was intermittently applied with a predetermined thickness to one end portion of the positive electrode core made of the aluminum foil in the short direction of the positive electrode core along the longitudinal direction of the positive electrode core to prepare a positive electrode first region. In addition, the positive electrode mixture slurry was applied with a predetermined thickness onto the remaining positive electrode core other than the positive electrode first region to prepare a positive electrode second region. A plurality of non-coated parts in the positive electrode first region were provided at intervals along the longitudinal direction of the positive electrode core, and a positive electrode lead was attached to each of the non-coated parts. The width of the positive electrode first region was set to 12 mm, and the width of the positive electrode second region was set to 62 mm.

In Examples 1 to 5 and Comparative Examples 1 and 2, coating thicknesses of the positive electrode mixture slurry in the positive electrode first region and the positive electrode second region were changed, and the mass per unit area of the positive electrode mixture layer in the first region coated part of the positive electrode first region and the mass per unit area of the positive electrode mixture layer in the second region coated part of the positive electrode second region were set to values shown in Table 1 below. Regarding the values of the mass per unit area of the positive electrode mixture layer in Table 1, the mass per unit area of the positive electrode mixture layer in the first region coated part of Comparative Example 1 was used as a reference (100), and the other values were expressed as relative values.

**[Table 1]**

| | Mass per unit area of positive electrode mixture layer | |
|---|---|---|
| | First region coated part | Second region coated part |
| Example 1 | 104.0 | 99.0 |
| Example 2 | 104.0 | 99.0 |
| Example 3 | 102.0 | 99.5 |
| Example 4 | 104.0 | 100.0 |
| Example 5 | 102.0 | 98.0 |
| Comparative Example 1 | 100.0 | 100.0 |
| Comparative Example 2 | 101.0 | 99.5 |

A positive electrode member in which the positive electrode first region and the positive electrode second region were formed was dried and rolled using a roller. **In** this way, the positive electrode shown in FIG. 3 was obtained.

### [Production of Negative Electrode]

Natural graphite as a negative electrode active material, sodium carboxymethylcellulose (CMC-Na), and styrene-butadiene rubber (SBR) were mixed at a solid content mass ratio of 100: 1: 1 in an aqueous solution to prepare a negative electrode mixture slurry.

The negative electrode mixture slurry was applied to a predetermined position of a negative electrode core made of a copper foil to produce a negative electrode shown in FIG. 5. Specifically, the other end portion in a short direction of a negative electrode current collector made of a copper foil was set as a non-coated part, and a region other than the non-coated part was set as a coated part. Then, the negative electrode mixture slurry was applied with a predetermined thickness to one end portion of the negative electrode core in the short direction of the negative electrode core in the coated part along the longitudinal direction of the negative electrode core to prepare a negative electrode first region. In addition, the negative electrode mixture slurry was applied with a predetermined thickness onto the remaining negative electrode core other than the negative electrode first region in the coated part to prepare a negative electrode second region. The width of the negative electrode first region was set to 13 mm, and the width of the negative electrode second region was set to 63 mm.

In Examples 1 to 5 and Comparative Examples 1 and 2, coating thicknesses of the negative electrode mixture slurry in the negative electrode first region and the negative electrode second region were changed, and the mass per unit area of the negative electrode mixture layer in the first region coated part of the negative electrode first region and the mass per unit area of the negative electrode mixture layer in the second region coated part of the negative electrode second region were set to values shown in Table 2 below. Regarding the values of the mass per unit area of the negative electrode mixture layer in Table 2, the mass per unit area of the negative electrode mixture layer in the first region coated part of Comparative Example 1 was used as a reference (100), and the other values were expressed as relative values.

**[Table 2]**

| | Mass per unit area of negative electrode mixture layer | |
|---|---|---|
| | First region coated part | Second region coated part |
| Example 1 | 104.0 | 99.0 |
| Example 2 | 100.0 | 100.0 |
| Example 3 | 102.0 | 99.5 |
| Example 4 | 100.0 | 99.0 |
| Example 5 | 100.0 | 100.0 |
| Comparative Example 1 | 100.0 | 100.0 |
| Comparative Example 2 | 101.0 | 99.5 |

### [Preparation of Non-Aqueous Electrolyte]

Lithium hexafluorophosphate (LiPF₆) was dissolved at a concentration of 1.0 mol/liter in a mixed solvent obtained by mixing ethylene carbonate (EC), ethyl methyl carbonate (EMC), and dimethyl carbonate (DMC) at a volume ratio of 3:3:4 to prepare a non-aqueous electrolyte.

### [Production of Secondary Battery]

The positive electrode of Example 1 and the negative electrode of Example 1 were spirally wound with a separator made of polyolefin interposed between the positive electrode and the negative electrode to produce a wound electrode assembly. In the production of the electrode assembly, the positive electrode and the negative electrode were arranged to face each other such that the negative electrode first region and the positive electrode first region were located on one end side of the electrode assembly in the winding axis direction of the electrode assembly. The above-described electrode assembly was housed in a case body, the non-coated part of the negative electrode was brought into contact with a bottom portion of the case body, and a positive electrode lead was welded to a sealing assembly. After the non-aqueous electrolyte was injected into the case body, the opening of the case body was sealed with the sealing assembly via a gasket to produce a secondary battery.

Also in Examples 2 to 5 and Comparative Examples 1 and 2, secondary batteries were produced using the produced positive electrodes and the produced negative electrodes in the same manner as in Example 1.

### [Charge-Discharge Test]

The secondary batteries of Examples and Comparative Examples were charged at a constant current of 0.2 C under a temperature environment of 25°C, and charged at a constant voltage until the charge current reached a current value less than or equal to 0.01 mA when the battery voltage reached 4.2 V. Subsequently, the second batteries were discharged at a constant current of 0.2 C until the battery voltage reached 2.5 V. The charging and discharging were performed for 1000 cycles.

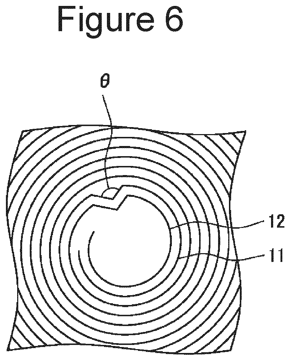

The electrode assembly taken out from each of the secondary batteries of Examples and Comparative Examples after the charge-discharge test was observed to evaluate whether or not winding deviation of the positive electrode in the short direction, positive electrode floating, precipitation of metal lithium, and deformation of an electrode plate occurred during charging and discharging of the battery. The results are summarized in Table 3. With respect to the winding deviation of the positive electrode in the short direction, when the distance in the winding axis direction from one end portion of the positive electrode to one end portion of the negative electrode in the electrode assembly before the charge-discharge test is used as a reference, and the above-described distance in the electrode assembly after the charge-discharge test was shorter than or equal to 0.1 mm, it was evaluated that the winding deviation of the positive electrode in the short direction occurred. With respect to the positive electrode floating, it was evaluated that the positive electrode floating occurred when one end portion of the positive electrode in the short direction was separated from the facing separator by a distance longer than or equal to 0.1 mm. With respect to the deformation of the electrode plate, as shown in FIG. 6, when deformation (bending) of the electrode plate (at least one of the positive electrode 11 and the negative electrode 12) having an angle θ less than or equal to 150° was observed in the cross section of the electrode assembly, it was determined that the electrode plate was deformed.

**[Table 3]**

| | Positive electrode floating | Winding deviation of positive electrode in short direction | Precipitation of metal lithium | Deformation of electrode plate |
|---|---|---|---|---|
| Example 1 | None | None | None | None |
| Example 2 | None | None | None | None |
| Example 3 | None | None | None | None |
| Example 4 | None | None | Occurred | None |
| Example 5 | None | None | None | None |
| Comparative Example 1 | Occurred | Occurred | None | Occurred |
| Comparative Example 2 | Occurred | Occurred | None | None |

As shown in Table 3, no winding deviation in the short direction of the positive electrode and no positive electrode floating occurred in Examples 1 to 5. On the other hand, in Comparative Examples 1 to 2, winding deviation of the positive electrode in the short direction and positive electrode floating occurred. From these results, it can be said that with respect to the positive electrode, since the mass per unit area of the positive electrode mixture layer in the first region coated part is greater than the mass per unit area of the positive electrode mixture layer in the second region coated part by a value greater than or equal to 4%, it is possible to suppress winding deviation in the short direction of the positive electrode and positive electrode floating.

### REFERENCE SIGNS LIST

- 10: Secondary battery
- 11: Positive electrode
- 11a: One end portion
- 11b: Other end portion
- 12: Negative electrode
- 12a: One end portion
- 12b: Other end portion
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Positive electrode first region
- 30a: Positive electrode central end portion
- 30b: Non-coated part
- 30c: First region coated part
- 32: Positive electrode second region
- 32a: Second region coated part
- 36: Negative electrode first region
- 36a: Negative electrode central end portion
- 36b: First region coated part
- 38: Negative electrode second region
- 38a: Second region coated part
- 40, 42: Non-coated part

## Claims

1. A secondary battery positive electrode comprising: a belt-like positive electrode core; and a positive electrode mixture layer disposed on the positive electrode core, wherein
the secondary battery positive electrode has a positive electrode first region located on one end portion side of the positive electrode in a short direction of the positive electrode and a positive electrode second region which is a region from a positive electrode central end portion of the positive electrode first region to the other end portion in the short direction,
the positive electrode first region has a non-coated part where the positive electrode mixture layer is not disposed on the positive electrode core, and a first region coated part where the positive electrode mixture layer is disposed on the positive electrode core,
the positive electrode second region has a second region coated part where the positive electrode mixture layer is disposed on the positive electrode core, and
a mass per unit area of the positive electrode mixture layer in the first region coated part is greater than a mass per unit area of the positive electrode mixture layer in the second region coated part by a value greater than or equal to 4%.

2. A secondary battery comprising an electrode assembly in which the secondary battery positive electrode according to claim 1 and a negative electrode having a belt-like negative electrode core and a negative electrode mixture layer disposed on the negative electrode core are wound with a separator interposed between the secondary battery positive electrode and the negative electrode.

3. The secondary battery according to claim 2, wherein
the negative electrode includes a negative electrode first region located on one end portion side of the negative electrode in a short direction of the negative electrode, and a negative electrode second region which is a region from a positive electrode central end portion of the negative electrode first region to the other end portion in the short direction,
the negative electrode first region includes a first region coated part where the negative electrode mixture layer is disposed on the negative electrode core,
the negative electrode second region includes a second region coated part where the negative electrode mixture layer is disposed on the negative electrode core,
the negative electrode first region and the positive electrode first region are disposed on one end side of the electrode assembly in a winding axis direction of the electrode assembly, and a mass per unit area of the negative electrode mixture layer in the first coated part is greater than a mass per unit area of the negative electrode mixture layer in the second region coated part by a value greater than or equal to 4%.
